# EUROPÄISCHE PATENTSCHRIFT

(11) **EP 0 505 725 B1**
(45) Veröffentlichungstag und Bekanntmachung des Hinweises auf die Patenterteilung: **17.01.1996**
(21) Anmeldenummer: 92102789.2
(22) Anmeldetag: 20.02.1992
(51) Int. Cl.: G02B 6/44

(54) **Lichtleiter**
Light guide
Guide de lumière

(30) Priorität: 28.03.1991 DE 4110279
(43) Veröffentlichungstag der Anmeldung: 30.09.1992
(73) Patentinhaber: ALFO AG AKTIENGESELLSCHAFT FÜR INDUSTRIEAPPARATE, CH-3280 Muntelier (CH)
(72) Erfinder: Brennecke, Hermann, Dipl.-Ing., W-6100 Darmstadt/Eberstadt (DE); Liere, Horst, Dipl.-Ing., W-6116 Eppertshausen (DE)
(74) Vertreter: Brommer, Hans Joachim, Dr.-Ing.

(56) Entgegenhaltungen:
- DE-A- 3 504 041
- DE-A- 3 618 659
- US-A- 4 896 939
- PATENT ABSTRACTS OF JAPAN vol. 7, no. 51 (P-179)(1196) 26. Februar 1983 & JP-A-57 198 419
- PATENT ABSTRACTS OF JAPAN vol. 6, no. 221 (P-153)(1099) 5. November 1982 & JP-A-57 124 308

## Beschreibung

Die Erfindung betrifft ein Lichtleiterkabel gemäß dem Oberbegriff von Patentanspruch 1.

Lichtleiter werden in der Nachrichtentechnik und Meßtechnik zum Weiterleiten elektromagnetischer Wellen, insbesondere im sichtbaren und nahen infraroten Spektralbereich eingesetzt, wo sie sich durch niedrige Dämpfungsfaktoren auszeichnen. Ihr Einbau erfolgt über genormte Anschlußarmaturen, wobei die Lichtleitfasern mittels eines Klebers oder einer Vergußmasse in der Armatur gehalten sind. Aufgrund der isolierenden Eigenschaften der Lichtleitfasern, die aus Quarz, Glas oder Kunststoff bestehen, können die Lichtleiter bei entsprechend isolierender Ausbildung des Schutzmantels auch an Spannung führende Teile angeschlossen werden, ohne daß es zusätzlicher Schutzmaßnahmen bedarf.

Untersuchungen der Anmelderin haben überraschend ergeben, daß es trotz der isolierenden Eigenschaften der Lichtleiter zur Übertragung von Ladungen kommen kann. Für normale elektronische Anwendungen, die im Mikroampere-Bereich arbeiten, ist dies unproblematisch. Es gibt jedoch auch hochempfindliche Elektronikschaltungen, bei denen solche lokale Aufladungen zu Störungen führen können.

Die US-A 4 896 939 offenbart einen Lichtleiter mit einem Schutzmantel sowie eine Endarmatur in Form eines Stekkers. Die Faser ist von einer metallischen Schicht umgeben, so daß sie an ihrem Umfang elektrisch leitend ist. Dabei ist aber eine lokale Aufladung noch möglich.

Ausgehend von diesen Erkenntnissen liegt der vorliegenden Erfindung die Aufgabe zugrunde, die bekannten Lichtleiter dahingehend zu verbessern, daß lokale Aufladungen ausgeschlossen sind, und zwar auch dann, wenn die Lichtleiter Hochspannung ausgesetzt sind.

Diese Aufgabe wird erfindungsgemäß durch die kennzeichnenden Merkmale von Anspruch 1 gelöst.

Hierdurch ergibt sich der Vorteil, daß die Lichtleitfasern zumindest lokal in ihrem gefährdeten Bereich absolut aufladungsfrei gehalten werden können und daß aufgrund der von der Anmelderin festgestellten Elektronenleitung auch die benachbarten Bereiche der Lichtleitfasern auf niedrigem Potential bleiben, weil eine eventuelle Aufladung aufgrund der Erdung abfließt.

Besteht der Lichtleiter aus einem Bündel zahlreicher einzelner Lichtleitfasern, so wird erfindungsgemäß sichergestellt, daß die einzelnen Fasern zumindest lokal voneinander soweit distanziert sind, daß jede Einzelfaser mit der elektrisch leitfähigen Füllmasse in Verbindung kommt. Dadurch ist gewährleistet, daß jede Faser über ihre Erdverbindung entladen wird.

Bestehen die Lichtleitfasern aus Kunststoff, so ist ein niederschmelzendes Metall zu wählen, dessen Schmelzpunkt niedriger als der des Kunststoffes liegt.

Weitere Merkmale der Erfindung ergeben sich aus der nachfolgenden Beschreibung zweier Ausführungsbeispiele anhand der Zeichnung; dabei zeigt
- Fig. 1: das Ende eines Lichtleiters mit einer einzelnen Lichtleitfaser;
- Fig. 2: das Ende eines Lichtleiters mit einem Faserbündel und
- Fig. 3: einen Schnitt längs der Linie III-III in Fig. 2.

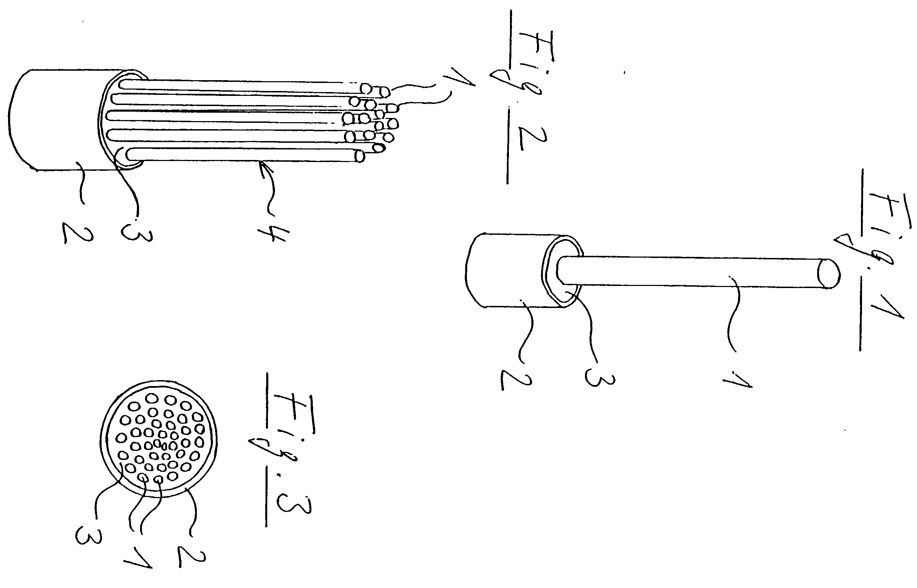

Gemäß Fig. 1 läuft eine Lichtleitfaser 1, deren Schutzmantel der Einfachheit halber weggelassen wurde, mit ihrem Ende koaxial in eine Anschlußarmatur 2. Die Anschlußarmatur besteht aus einer zylindrischen Hülse, kann jedoch auch eine andere Form aufweisen.

Wesentlich ist nun, daß zwischen der Lichtleitfaser 1 und der Armatur 2 ein Ringspalt vorliegt, der mit einem elektrisch leitfähigem Material in Form einer metallischen Füllmasse vergossen worden ist. Auf diese Weise entsteht zwischen der Lichtleitfaser und der Anschlußarmatur eine elektrische Verbindung 3, die direkt oder über die Anschlußarmatur 2, sofern letztere aus Metall besteht, an Erde angeschlossen wird.

Fig. 2 zeigt die entsprechende Darstellung bei einem aus zahlreichen Lichtleitfasern 1 gebildeten Bündel 4. Man erkennt hier insbesondere aus der Schnittdarstellung in Fig. 3, daß die einzelnen Fasern soweit voneinander distanziert sind, daß auch die innen liegenden Fasern an die elektrisch leitende Verbindung 3 angeschlossen sind.

Üblicherweise sind die Lichtleitfasern an ihrer Oberfläche durch eine Beschichtung optisch vergütet. Diese Vergütung muß, wenn sie nicht selbst elektrisch leitfähig ist, zumindest lokal entfernt werden bevor die elektrisch leitfähige Füllmasse eingebracht wird.

In beiden Ausführungsformen ist durch die unmittelbar am Umfang der Lichtleitfaser angreifende elektrische Querverbindung 3 sichergestellt, daß eventuelle Aufladungen von allen Fasern abgeführt werden, bevor sich ein gefährlich hohes Spannungspotential bildet.

## Patentansprüche

1. Lichtleiterkabel mit mindestens einer Lichtleitfaser (1), einem Schutzmantel (2) und einer endständigen Anschlußarmatur (2),
dadurch gekennzeichnet,
daß jede Lichtleitfaser (1) mindestens teilweise von einer metallischen Füllmasse umgeben ist, die eine leitende Verbindung zwischen der Glasfaseroberfläche und der Anschlußarmatur bildet und
daß die metallische Füllmasse von außen kontaktierbar ist, so daß diffundierende Ladungen auf der Glasfaseroberfläche über die geerdete metallische Füllmasse abgeleitet werden können.

2. Lichtleiterkabel nach Anspruch mit einem Bündel (4) von Lichtleitfasern (1),
dadurch gekennzeichnet,
daß die Lichtleitfasern (1) zumindest lokal voneinander distanziert sind, so daß jede Faser (1) mit der Füllmasse in Verbindung steht.

3. Lichtleiterkabel nach Anspruch 1 oder 2,
dadurch gekennzeichnet,
daß die metallische Füllmasse niederschmelzend ist.

## Claims

1. A light-conducting cable with at least one light conducting fibre (1), a protective jacket (2) and a terminal coupling fitting (2),
characterised in that
each light-conducting fibre (1) is at least partially surrounded by a metallic filler mass which forms a conductive connection between the glass fibre surface and the coupling fitting and
in that the metallic filler mass is contactable from the outside so that diffusing charges on the glass fibre surface can be conducted away via the earthed metallic filler mass.

2. A light conducting cable according to claim 1 with a bundle (4) of light-conducting fibres (1),
characterised in that
the light conducting fibres (1) are at least locally mutually spaced apart such that each fibre (1) is in connection with the filler mass.

3. A light conducting cable according to claim 1 or 2,
characterised in that
the metallic filler mass is a low-melt one.

## Revendications

1. Câble optique comportant au moins une fibre optique (1), une enveloppe protectrice (2) et une armature de raccordement (2) se trouvant à une extrémité,
caractérisé en ce que chaque fibre optique (1) est, au moins partiellement, entourée d'une matière de remplissage métallique qui forme une liaison conductrice entre la surface de fibre de verre et l'armature de raccordement et
en ce qu'on peut établir un contact de l'extérieur avec la matière de remplissage métallique, de sorte que des charges diffusantes sur la surface de fibre de verre peuvent être dérivées par l'intermédiaire de la matière de remplissage métallique mise à la terre.

2. Câble optique selon la revendication 1 comportant un faisceau (4) de fibres optiques (1),
caractérisé en ce que
les fibres optiques (1) sont, au moins localement, désolidarisées les unes des autres, de sorte que chaque fibre (1) est en liaison avec la matière de remplissage.

3. Câble optique selon la revendication 1 ou 2,
caractérisé en ce que la matière de remplissage métallique a un point de fusion bas.
